# EUROPEAN PATENT SPECIFICATION

(11) **EP 3 705 076 B1**
(45) Date of publication and mention of the grant of the patent: **18.01.2023**
(21) Application number: 19161408.0
(22) Date of filing: 07.03.2019
(51) Int. Cl.: A61C 3/025

(54) **NOZZLE ELEMENT AND DENTAL TREATMENT DEVICE HAVING SUCH A NOZZLE ELEMENT**
DÜSENELEMENT UND ZAHNBEHANDLUNGSVORRICHTUNG MIT SOLCH EINEM DÜSENELEMENT
ÉLÉMENT DE BUSE ET DISPOSITIF DE TRAITEMENT DENTAIRE DOTÉ D'UN TEL ÉLÉMENT DE BUSE

(43) Date of publication of application: 09.09.2020
(73) Proprietor: Ferton Holding S.A., 2800 Delémont (CH)
(72) Inventor: Beani, Florent, 01170 Gex (FR); Bertolote, Tiago, 1218 Le Grand-Saconnex (CH); Donnet, Marcel, 01630 Saint Jean de Gonville (FR); Fournier, Maxime, 1010 Lausanne (CH); Lebreton, Etienne, 1023 Crissier (CH)
(74) Representative: Müller Schupfner & Partner Patent- und Rechtsanwaltspartnerschaft mbB

(56) References cited:
- EP-A1- 2 965 708
- DE-U1- 20 205 274
- JP-A- 2002 238 923

## Description

The present invention concerns a nozzle element and a dental treatment device having such a nozzle element.

Nozzle elements for dental treatment devices, in particular for powder jet devices that are intended for polishing a surface of a tooth, are well known in the prior art.

DE 20 20 205 274 U1 relates to a medical, in particular dental-medical handpiece, which has in its rearward end region a coupling connection for coupling on to a flexible supply hose, wherein at least one delivery line for an abrasive flow medium extends from the coupling connection to an outlet which is arranged in the forward end region of the handpiece and opens into a hood-form free space of a splash guard.

JP 2002 238 923 A discusses a jet nozzle. In the hand piece of the jet nozzle, the apex parts of at least two pipe members are coaxially arranged and holes are coaxially made in the side walls close to the apex parts. Compressed air containing an abrasive material is jetted from a first jetting hole made in the first pipe member and a cleaning liquid is jetted from a second jetting hole made in the second pipe member.

EP 2 965 708 A1 concerns a nozzle for a dental handpiece. The nozzle has slanted faces.

A specific nozzle element is for example known from DE 103 31 583 B3. Said nozzle element is configured for a subgingival cleaning of at least a part of a surface of a root of a tooth. However, several challenges accompany utilizing a nozzle element for the subgingival cleaning, since the nozzle elements have to be inserted into a periodontal pocket. In particular, the nozzle element has to exhibit appropriate mechanical properties (e.g. stiffness) in order for the treatment to be performed in optimal conditions. Therefore, the nozzle element has an elongated basic body and DE 103 31 583 B3 suggests to laterally eject a powder-gas-mixture. Thus, the ejected powder-gas-mixture is directed to the surface of the root of the tooth, when the nozzle element is inserted into the periodontal pocket. However, another challenge for nozzle elements, utilized for subgingival cleaning, is reducing a risk or subcutaneous emphysema. Such a subcutaneous emphysema might cause a bacterial infection, i. e. a bacteremia, and represents a major risk of subgingival air polishing. Even though laterally ejecting the powder-gas-mixture reduces the risk for subcutaneous emphysema, it is an object of the present invention to provide a nozzle element, which further reduces the risk of a subcutaneous emphysema.

This object is achieved by a nozzle element according to claim 1 and a dental treatment device according to claim 15.

Preferred embodiments are incorporated in the dependent claims, the description and the figures.

According to a first aspect of the present invention a nozzle element for a dental treatment device, in particular for a dental treatment device intended for a subgingival cleaning of at least a part of a surface of a root of a tooth, is provided, comprising:
- a basic body being elongated in a longitudinal direction and configured to be introduced at least partially into a periodontal pocket,
- a first feed channel for transporting a powder - gas - mixture, wherein said first feed channel is incorporated inside the basic body,
- a first outlet opening of said first feed channel in an end region of the elongated basic body for ejecting the powder - gas - mixture, wherein said first outlet opening is preferably configured for a lateral ejection of the powder - gas - mixture in a first ejection direction being slanted relative to the longitudinal direction,
characterized in that the nozzle element further comprises at least one pressure relief channel comprising a structure in the basic body that allows air to flow or stream out of the periodontal pocket by streaming along or inside the basic body.

Contrary to the state of the art, the nozzle element according to the present invention realizes at least one pressure relief channel preferably at least at the end region of the basic body and/or along the length of the basic body. Said at least one pressure relief channel reduces the pressure at the end region of the basic body that would be otherwise realized during utilization of the nozzle element in the periodontal pocket. This at least one pressure relief channel has to be dimensioned to have at least a length equal to or greater than the periodontal pocket in which it is inserted. It turned out that it is possible to reduce the pressure inside the periodontal pocket from 0.8 bars (for a nozzle element having no pressure relief channel) by about 30 %. Since subcutaneous emphysema is mainly influenced by a penetration of contaminated air and bacteria, reducing the pressure inside the pocket by the nozzle element according to the present invention advantageously reduces the risk for said subcutaneous emphysema.

In addition and contrary to the state of the art, the nozzle element according to the present invention allows for the presence of at least one pressure relief channel without losing mechanical characteristics of the nozzle that are necessary for the treatment when the nozzle is inserted into the periodontal pocket.

The term "pressure relief channel" describes any structure of the basic body that allows air to flow or stream out of the periodontal pocket, in particular from the periodontal pocket bottom where the air-gas-mixture is ejected, by streaming along or inside the basic body. The pressure relief channel includes any structure of the basic body that establishes or allows air to flow from the first outlet opening out of the periodontal pocket. The pressure relief channel might even be realized by a channel or hole that at least partially extends inside the basic body. The pressure relief channel preferably extends along the length of the basic body and has a length equal to or greater than the length of the periodontal pocket. However, also a shorter length is possible, e.g. from the end up to an area where the periodontal pocket opens a bit so as to relief the air which then flows or streams out of the periodontal pocket.

Preferably, the basic body forms an elongated and flat basic body that can be inserted into the periodontal pocket. The term "elongated" means that a length of the basic body in longitudinal direction is at least more than 5 times greater than a diameter of the basic body measured in a direction perpendicular to the longitudinal direction. The term "end region" particularly represents the section of the basic body that includes the first outlet opening. Preferably, the end region extends in longitudinal direction up to 5 mm, more preferably up to 2.5 mm and most preferably up to 1.5 mm from a distal end of the basic body, facing a bottom of the periodontal pocket during its utilization. In particular, the term "incorporated" means that the first feed channel is included inside the basic body.

The nozzle element might further be configured to be reversible attachable to a hand piece or is an integral part of the hand-piece. Preferably, the basic body comprises a first side wall and a second side wall, wherein in utilization of the nozzle element the first side wall faces a surface of the tooth and the second side wall faces the gum. Preferably, the first outlet is incorporated into the first side wall and/or the second side wall. Furthermore, it is conceivable that a plurality of first outlets are realized in the first and/or second side wall. For example, several first outlets are arranged at the same height in longitudinal direction or they are shifted relative to each other in longitudinal direction. It is preferably provided that the first outlets are homogeneously distributed along a circulating direction in a plane perpendicular to the longitudinal direction. In particular, the powder-gas-mixture is ejected from the first outlet in a first ejection direction being slanted relative to the longitudinal direction.

According to a preferred embodiment it is provided that the part of the at least one pressure relief channel is formed by the shape of an outer surface of the basic body, in particular by a groove extending to the end region of the basic body. For example the groove is U -, C - and/or V - shaped and extends along the outer surface in longitudinal direction. By realizing the pressure relief channel by the outer shape of the basic body there is no need for including a further channel inside the basic body. Furthermore, the outer surface can easily be cleaned for example by removing a blocking element from the pressure relief channel, because the groove is freely accessible. During the utilization of the nozzle element the groove or the recess faces the tooth, in particular the root of the tooth. Preferably, the pressure relief channel is included in the first side wall and/or the second side wall and, for example, the basic body has at least two grooves each forming a pressure relief channel. Preferably, one single groove is included in the first side wall and/or one single groove is incorporated in the second side wall, wherein the groove of the first side wall and the groove of the second side wall are preferably arranged opposite to each other. Furthermore, the groove is arranged in a middle of the first side wall measured in a direction parallel to the first side wall. Moreover, a cross section of the groove or recess measured in a plane perpendicular to the longitudinal direction maintains mainly constant or increases along the longitudinal direction from the distal end region to the proximal end of the nozzle element. It is also thinkable that a plurality of grooves is realized at the first side wall and/or the second side wall, in particular parallel to each other.

In particular, also a second feed channel for transporting a fluid is incorporated inside the basic body, wherein the second feed channel has a second outlet opening for ejecting the fluid at a front side (or distal side) of the basic body in the end region of the basic body. By using the second feed channel, it is advantageously possible to irrigate the periodontal pocket, in particular the periodontal pocket bottom. Thereby the fluid, preferably water, is ejected along a second ejection direction, wherein the second ejection direction is mainly parallel to the longitudinal direction of the basic body. In particular, the first ejection direction is slanted or tilted relative to the second ejection direction. For example, the first ejection direction is perpendicular to the second ejection direction. Furthermore, the first feed channel and the second feed channel extend mainly parallel to each other along the longitudinal direction.

In another embodiment, a cross section of the first feed channel measured in a plane perpendicular to the longitudinal direction is greater than a cross section of of the second feed channel measured in the same plane. Preferably, the first feed channel and, in particular its centre in said cross section, is arranged next to the second feed channel, in particular its centre in said cross section, in a direction that is mainly parallel to the general course of the first side wall and /or the second side wall.

Furthermore, it is preferably provided that the basic body is formed by a first tube forming the first channel and a second tube forming the second channel. By arranging the first tube and the second tube next to each other, it is advantageously possible to easily realize a recess or v-shaped groove at the outer surface of the basic body. For extending the groove till the end region, both the first tube and the second tube need to extend till the end region. In other words: the first and the second tube needs to have mainly the same length for realizing a pressure relief channel that extends to the end region and/or the first outlet.

According to a preferred embodiment it is provided that the basic body has at least a first side wall and optionally a second or more side wall being preferably opposite to the first side wall in a direction perpendicular to the longitudinal direction, wherein the first side wall and/or the second side wall has at least two contact points for contacting a surface of the tooth during its utilization, wherein the first side wall has a first recess between two contact points, in particular bounded by the first side wall and a thought first line between the two contact points at the first side wall, and/or the second side wall has a second recess between two contact points, in particular bounded by the second side wall and a thought second straight line between the two contact point at the second side wall. Thus, advantageously, the first and/or second recess is realized between two contact points for allowing air to stream out of the periodontal pocket. Without the first and/or second recess, the first side wall would for example contact the tooth, might form a sealing or constraining contact area and prevent air from streaming out of the pocket. The contact point and the recess might also be identified by a ruler or the like that is moved towards the first and/or second side wall till the ruler abuts the first side wall. Preferably, the first side wall and/or the second side wall has straight sections including a plurality of contact points and a curved section forming the recess in the first and/or second side wall. Preferably, the straight sections in sum are larger than the curved section at the first and/or second side wall. Preferably, it is provided that that the first side wall and the second side all mainly extend parallel to each other and/or have a mirror symmetry to a plane extending in the middle between the first side wall and the second side wall.

In particular, a first surface is assigned to the first recess and a second surface is assigned to the second recess, wherein a ratio of a sum of the first surface and the second surface to a total surface of the nozzle element has a value between 1 and 20 %, preferably between 2 and 15 % and most preferably between 3 and 10 % or even mostly 7 %. The total surface of the nozzle element is the total area of the basic body, including the channels.

Said ratio specifies the depth of the first and/or second recess. It turned out that the mentioned ratios realize both a stable nozzle element and a cross section of the pressure relief channel that streams sufficiently air from the periodontal pocket to the outside for significantly decreasing the pressure in the periodontal pocket.

Preferably, a first surface is assigned to the at least first recess and a second or more surface is assigned to the second or more recess, wherein the sum of the surfaces of the recesses is between 0.01 to 1 mm², preferably between 0.02 to 0.8 mm² and most preferably between 0.03 to 0.2 mm².

Preferably, a distance between the first side wall and the second side wall measured in a direction parallel to the first ejection direction is modulated in a direction being perpendicular to the first ejection direction and the longitudinal direction, i. e. the distance decreases and increases.

Furthermore, it is provided that
- in a cross section perpendicular to the longitudinal-direction the basic body has a minimal diameter extending between the first side wall and the second side wall, wherein the minimal diameter or distance is at least 0.2 mm and/or
- the first recess has a maximal first recess depth between the first side wall and the thought first line between the two contact points, the second recess has a maximal second recess depth between the second side wall and the thought second line between the contact points, wherein a ratio of a sum of the first recess depth and the second recess depth to the total distance between the thought first line and the thought second line has a value between 0.1 and 0.9, preferable 0.2 and 0.5 and most preferably between 0.3 and 0.45 or even mostly 0.37. The ratio specifies a thickness of the basic body in a region between the first feed channel and the second channel. It turned out that such a ratio provides a stable and durable nozzle element.

According to the present invention, it is provided that the basic body is formed from an elastic material and/or is formed integrally. Due its elasticity, the nozzle element can be deformed slightly in the periodontal pocket for avoiding for example injuries. The term "integrally" especially means that the nozzle element is not composed from several different components that for example are connected to each other in an adhesive way. Instead, the nozzle element might be moulded in one piece.

Furthermore, it is provided that the nozzle element has an attachment section for attaching the nozzle element to a hand piece or an adapter of the hand piece. Thus, the nozzle element can easily be applied to a hand piece or an air polishing device, in particular a powder jet device.

Preferably, it is provided that the attachment section is configured such that a longitudinal extension of the hand piece is orientated to be tilted relative to the first side wall about an angle less than 45°, more preferably less than 25° and most preferably less than 15°. As a consequence, the hand piece is orientated during its utilization such that the user has free view to the nozzle element and the periodontal pocket, since the hand piece does is not arranged in view direction.

Furthermore, it is conceivable that the first side wall and the second wall mainly extend parallel to each other along the longitudinal direction over the length of the basic body, wherein the relief pressure channel extends at least over the length of the basic body, preferably over the full length of the basic body.

It is also thinkable that the first recess and/or the second recess is arranged between the first channel and the second channel.

Another aspect of the present invention concerns a dental treatment device, in particular gas-powder-jet- device, having a nozzle element according to the present invention. All features and benefits mentioned in the context or the nozzle element apples analogously for the dental treatment device visa versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows a side view of a nozzle element according to a first preferred embodiment of the present invention in operation,
- Fig.2 and 3: schematically show different perspective views of a nozzle element according to a second preferred embodiment of the present invention,
- Fig.4: schematically shows a cross section through a nozzle element according to the third preferred embodiment of the present invention, and
- Fig.5: schematically shows a cross section through a nozzle element according to the forth preferred embodiment of the present invention.

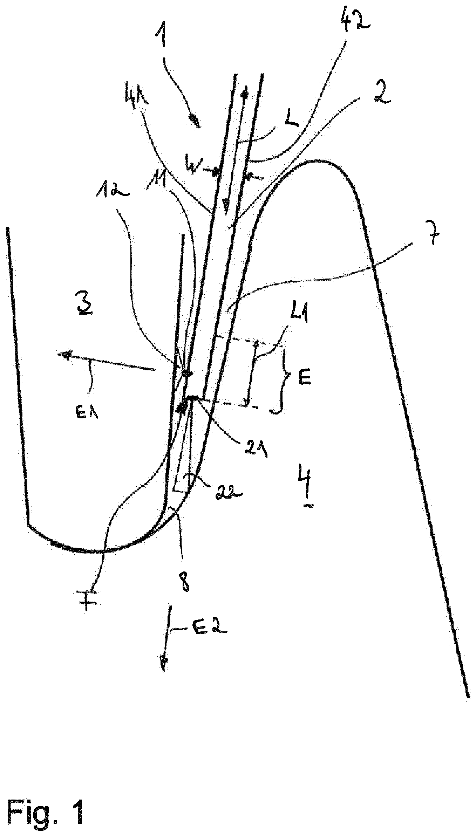

In **Figure 1** a nozzle element 1 according to a preferred embodiment of the present invention is shown, in particular during its utilization. Preferably, the nozzle element 1 is intended for subgingival cleaning, in particular for an air polishing of a root of a tooth 3. In operation, such a nozzle element 1 is placed inside a periodontal pocket 7 formed by a gum 4 or gingiva and the root of the tooth 3. For performing the cleaning of a surface of the root of the tooth 3, a powder-gas-mixture 12 is ejected from the nozzle element 1 being placed next to a location of surface area, which is about to be treated. In particular, the nozzle element 1 comprises a basic body 2, wherein the basic body 2 comprises a first side wall 41 and a second side wall 42. In particular, it is provided that in operation the first side wall 41 faces the root of the tooth 3 and the second side wall 42 faces the gum 4. Preferably, the first side wall 41 and the second side wall 42 mainly extend parallel to each other and form a mainly flat basic body 2 being elongated in a longitudinal direction L, i. e. the length of the first side wall 41 and/or the second side wall 42 measured in a direction parallel to the longitudinal direction L is greater, preferably more than 4 times greater than a width W of the nozzle element 1, measured between the first side wall 41 and the second side wall 42 in a direction perpendicular to the longitudinal direction L.

According to the invention the basic body 2 tapers along the longitudinal direction L to a front or distal side F of the basic body 2, which faces a periodontal pocket bottom 8 during utilization of the nozzle element 1, in particular by a slanted arrangement of the first side wall 41 and the second side wall 42 relative to each other. In particular, an end region E of the basic body 2 includes a front or distal side F facing, in utilization, to the periodontal pocket bottom 8. Due to the mainly flat dimensioning of the basic body 2, the nozzle element 1 is able to be introduced into the periodontal pocket 7 for getting free access to the tooth surface area of the root of the tooth 3, which is about to be treated.

Preferably, it is provided that the powder-gas-mixture 12 is laterally ejected from a first outlet opening 11, being incorporated into the first side wall 41 in the end region E of the basic body 2. For realizing such a lateral ejection, the first side wall 41 and/or the second side 42 wall includes said first outlet opening 11. Furthermore, it is provided that the powder-gas-mixture 12 is transported to the first outlet opening 11 via a first feed channel 10, which is incorporated inside the basic body 2. Especially, a second feed channel 20 is additional incorporated inside the basic body 2 for transporting a fluid 22, preferably water, to a second outlet opening 21. Contrary to the first outlet opening 11, the second outlet opening 21 is arranged at the front side F of the basic body 2 and ejects the fluid 22 towards the periodontal pocket bottom 8 during utilization of the nozzle element 1. As a consequence, the gas-powder mixture 12 is ejected from the first outlet opening 11 by the nozzle element 1 in a first ejection direction E1 and the fluid 22 is ejected from the second outlet opening 22 by the nozzle element 1 in a second ejection direction E2, wherein the first ejection direction E1 and the second ejection direction E2 are not parallel to each other or form at least an angle different from zero. In particular, the first ejection direction E1 extends perpendicular to the second ejection direction E2.

The arrangement of the first outlet opening 11 at the first side wall 41 and/or the second side wall 42, such that the gas-powder-mixture 12 is laterally ejected, mitigates a risk for forming a emphysema, which otherwise might be caused due to the penetration by pressurized, contaminated air and bacteria. For further reducing the risk of emphysema, the nozzle element 1 provides at least a part of at least one pressure relief channel that extend preferably until the end region E of the basic body 2. The end region E of the basic body 2 has a first length L1 extending from the front side F along the longitudinal direction L up to the 10 times, preferably up to 5 times and most preferably 2.5 times of the width W of the nozzle element 1 measured in the direction perpendicular to the longitudinal direction L between the first side wall 41 and the second side wall 42. Preferably, the first outlet opening 11 is arranged in the first side wall 41 and/or the second side 42 wall within the end region E. Furthermore, it is provided that the front side F of the basic body 2 is formed as a tip, i. e. pointed end.

For example, the pressure relief channel is incorporated inside the basic body 2. More preferably, it is provided that an outer surface A of the basic body 2, in particular the outer surface A of the first side wall 41 and/or the second side wall 42 are formed such that a first recess S1 and/or second recess S2 is realized for providing at least a part of the pressure relief channel. In particular, it is conceivable that the surface of the root of the tooth 3 / gum 4 and the surface of the first side wall 41 at the first recess S1/ of the second side wall 42 at the second recess S2 forms the whole pressure relief channel during utilization of the nozzle element 1. In particular, it could be shown that by using the pressure relief channel a pressure in the periodontal pocket 7 can be successfully decreased by 30 %.

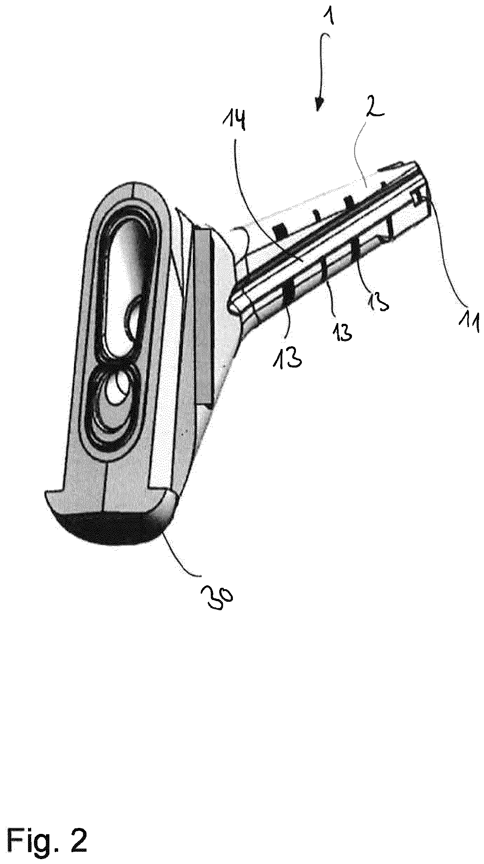

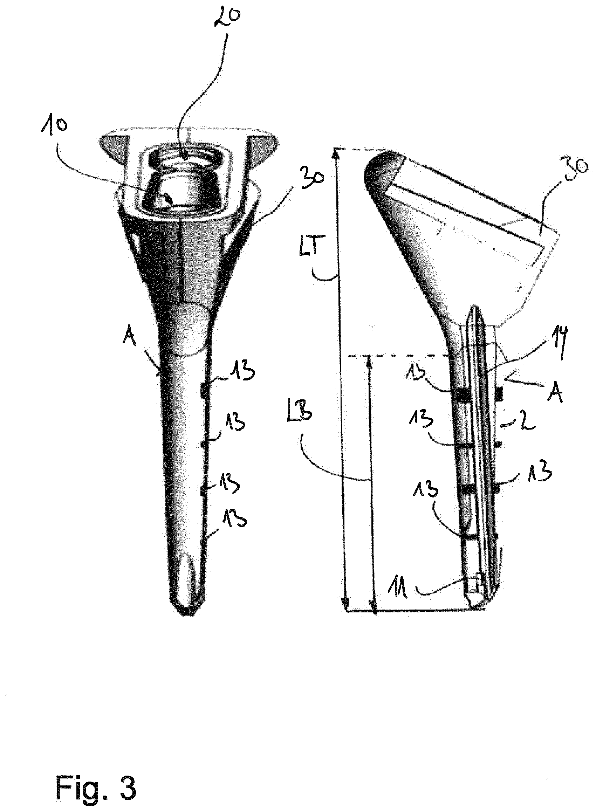

**Figures 2** **and** **3** show a nozzle element 1 according to a second preferred embodiment, in several different perspective views. The nozzle element 1 mainly corresponds to the nozzle element 1 shown in Figure 1, but additionally specifies the first recess S1 and/or second recess S2 as groove 14, in particular as v-shaped groove 14. Furthermore, the nozzle element 1 has an attachment section 30 for reversibly attaching the nozzle element to a hand piece (not shown) that generates and provides the powder-gas-mixture 12 and/or the fluid 22, in particular such that the powder-gas-mixture 12 and the fluid 22 have appropriate pressures.

Preferably, the nozzle element 2 includes an attachment section 30 forming an interface for connecting the nozzle element 1 to the hand piece (not shown). For example, the attachment section 30 includes funnel-shaped parts of the first channel 10 and the second channel 20. Furthermore, the attachment section 30 is adjacent to the basic body 2. Especially, the basic body 1 is defined by the first side wall 41 and the second side wall 42 being preferably opposite to each other such that the first side wall 41 and the second side wall 42 are mainly parallel to each other. "Mainly parallel" means here that an inclination angle between the first side wall 41 and the second side wall 42 is less than 15°, preferably less than 5°. In contrast to that, the first side wall 41 and the second side wall 42 in the attachment section 30 are arranged such that the inclination angle between the first side wall 41 and the second side wall 42 is greater than 15°. For example, the basic body 2 having a length LB extends mainly between 5 and 15 mm, preferably 10 mm, along the longitudinal direction L, wherein a total length LT of the nozzle element 1 is mainly between 10 and 30 mm and preferably 20 mm. In particular, a ratio between the length LB of the basic body 2 to the total length LT of the nozzle element 1 measured along the longitudinal direction L is between 0.4 and 0.6.

Particularly, the pressure relief channel extends at least from the end region E of the basic body 2 to the attachment section 30 of the nozzle element 2. For forming the part of the pressure relief channel at the basic body 2 a groove 14 extending straight along the longitudinal direction is provided, which preferably is located between a centre of the first channel 10 and a centre of the second channel 20 in a direction perpendicular to the longitudinal direction L. Furthermore, it is provided that the groove 14 is incorporated into the first side wall 41 and/or the second side wall 42 or is formed by the curvature of the first side wall 41 and/or the second side wall 42.

The nozzle element 1, in particular the basic body 2, shown in figures 2 and 3 has marking elements 13 being arranged at the outer surface A. Thus it is advantageously possible to monitor how far the basic body 2 is introduced into the periodontal pocket 7 during its utilization.

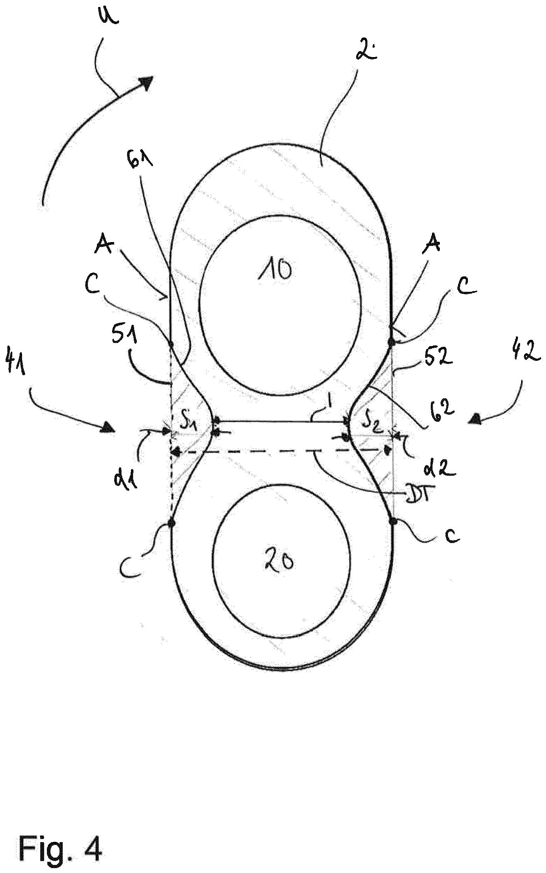

**Figure 4** shows schematically a cross section through a nozzle element 1 according to the third preferred embodiment of the present invention. Especially, the cross section shown in figure 4 could be realized by the nozzle element 1 shown in figures 2 and 3. Especially, the cross sectional view shows that outer surface A of the basic body 2 includes at least two contact points C that during utilization can contact the surface of the root of the tooth 3 simultaneously, wherein between the two contact points C along a circulating direction U the first recess S1 is arranged between the two contact point 2 of the first side wall 41 and/or 42 second recess S2 is arranged between the two contact point C at the second side wall 42. Especially the first recess S1 is bounded or defined by the outer surface A of the first side wall 41 in the region of the first recess S1 and a thought first straight line 51 between the two contact points C at the first side wall 41. Analogously, a second recess S2 is bounded or defined by the outer surface A of the second side wall 42 in the region of the second recess S2 and a thought second straight line 52 between the two contact points C at the second side wall 42.

Furthermore, a first surface 61 of the first side wall 41 can be assigned to the first recess S1 and a second surface 62 of the second side wall 42 can be assigned to the second recess S2, wherein a ratio of a sum of the first surface S1 and the second surface S2 to a total surface of the nozzle element 1 has a value between 1 and 20 %, preferably between 2 and 15 % and most preferably between 3 and 10 % or even mostly 7 %. Thus, a stable nozzle element 1 can be produced, wherein the nozzle element 1 is designed still as small as possible.

Furthermore, a first surface 61 of the first side wall 41 can be assigned to the first recess S1 and a second surface 62 of the second side wall 42 can be assigned to the second recess S2, wherein the sum of the surfaces S1 and S2 is between 0.01 and 1 mm², preferably between 0.02 and 0.8 mm² and most preferably between 0.03 and 0.2 mm².

Further, in a cross section perpendicular to the longitudinal direction L the basic body 2 has a minimal distance I between the first side wall 41 and the second side wall 42, wherein the minimal distance is at least 0.2 mm and/or the first recess S1 has a maximal first recess depth d1 between the first side wall 41 and the thought first line 51 between the two contact points C, the second recess S2 has a maximal second recess depth d2 between the second side wall 42 and the thought second line 52 between the contact points C, wherein a ratio of a sum of the first recess depth d1 and the second recess depth d2 to the total distance DT between the thought first line 51 and the thought second line 52 has a value between 0.1 and 0.9, preferable 0.2 and 0.5 and most preferably between 0.3 and 0.45 or even mostly 0.37.

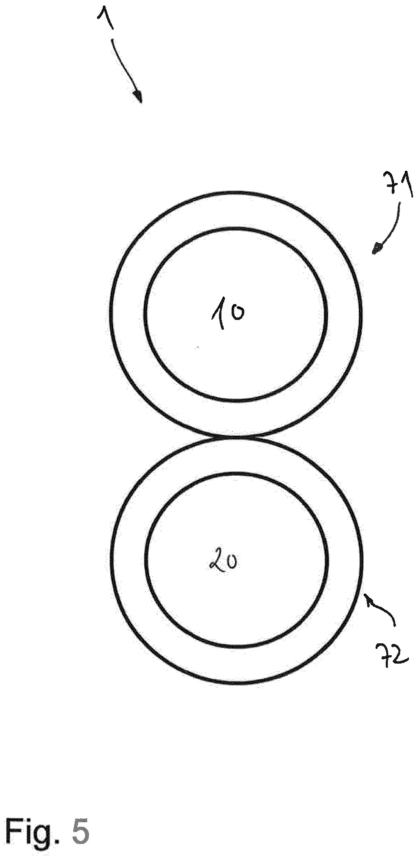

**Figure 5** schematically shows a cross section through a nozzle element 1 according to the fourth preferred embodiment of the present invention. Especially, the nozzle element 1 shown in figure 5 comprises a first tube 71 and a second tube 72, wherein the first tube 71 forms the first channel 10 and the second tube 72 forms the second channel 20.

### Reference signs:

- 1: nozzle element
- 2: basic body
- 3: root of the tooth
- 4: gum
- 7: periodontal pocket
- 8: bottom
- 10: first feed channel
- 11: first outlet opening
- 12: powder-gas-mixture
- 13: marking
- 14: groove
- 20: second feed channel
- 21: second outlet opening
- 22: fluid
- 30: attachment section
- 41: first side wall
- 42: second side wall
- 51: thought first straight line
- 52: thought second straight line
- 61: first surface
- 62: second surface
- 71: first tube
- 72: second tube
- S1: first recess
- S2: second recess
- d1: first recess depth
- d2: second recess depth
- I: minimal distance
- A: outer surface
- E: end region
- E1: first ejection direction
- E2: second ejection direction
- F: front (distal) side
- DT: total distance
- W: width
- L: longitudinal direction
- L1: first length
- LT: total length
- LB: length of basic body
- C: contact point
- U: circulating direction

## Claims

1. A nozzle element (1) for a dental treatment device comprising:
- a basic body (2) being elongated in a longitudinal direction (L) and configured to be introduced at least partially into a periodontal pocket (7),
- a first feed channel (10) for transporting a powder - gas - mixture (12), wherein said first feed channel (10) is incorporated inside the basic body (2),
- a first outlet opening (11) of said first feed channel (10) in an end region (E) of the elongated basic body (2) for ejecting the powder - gas - mixture (12), wherein said first outlet opening (11) is configured for a lateral ejection of the powder - gas - mixture (12) in a first ejection (E1) direction being slanted relative to the longitudinal direction (L), wherein the basic body (2) tapers along the longitudinal direction (L) to a front or distal side (F) of the basic body (2),
**characterized in that** the nozzle element further comprises at least one pressure relief channel (14) comprising a structure in the basic body that allows air to flow or stream out of the periodontal pocket by streaming along or inside the basic body.

2. The nozzle element (1) according to claim 1, wherein the part of the at least one pressure relief channel is formed
(i) at the end region (E) of the basic body (2) or
(ii) along the length of the basic body (2) and has a length equal to or greater than the length of the periodontal pocket (7) in which it is inserted and/or
(iii) by the shape of an outer surface (A) of the basic body (2), namely by a groove (14) extending to the end region (E) of the basic body (2).

3. The nozzle element (1) according to one of the preceding claims, wherein a second feed channel (20) for transporting a fluid (21) is incorporated inside the basic body (2), wherein the second feed channel (20) has a second outlet opening (21) for ejecting the fluid (21) in a second ejection direction (E2) at a front (distal) side (F) of the basic body (2) in the end region (E) of the basic body (2).

4. The nozzle element (1) according to claim 3, wherein the basic body (2) is formed by a first tube (71) forming the first channel (10) and a second tube (72) forming the second channel (20).

5. The nozzle element (1) according to one of the preceding claims, wherein the basic body (2) has at least a first side wall (41) and a second or more side wall (42) being opposite to the first side wall (41) in a direction perpendicular to the longitudinal direction (L), wherein the first side wall (41) and/or the second side wall (42) has at least two contact points (C) for contacting a surface of the tooth during its utilization, wherein the first side wall (41) has a first recess (S1) between two contact points (C), bounded by the first side wall (41) and a thought first line (51) between the two contact points (C) at the first side wall (41), and/or the second side wall (42) has a second recess (S2) between two contact points (C), bounded by the second side wall (42) and a thought second straight line (52) between the two contact points (C) at the second side wall (42).

6. The nozzle element (1) according to one of the preceding claims, wherein
- a first surface (61) of the first wall (41) is assigned to the first recess (S1) and
- a second surface (62) of the second wall (42) is assigned to the second recess (S2),
wherein a ratio of a sum of the first surface (61) and the second surface (62) to a total surface of the nozzle element (1) has a value between 1 and 20 %,

7. The nozzle element (1) according to one of the preceding claims, wherein
- a first surface (61) of the first wall (41) is assigned to the first recess (S1) and optionally
- a second or more surfaces (62) of the second or more wall (42) is assigned to the second or more recesses (S2),
wherein the sum of the surfaces 61 and 62 of the recesses is between 0.01 to 1 mm².

8. The nozzle element (1) according to one of the preceding claims, wherein a distance between the first side wall (41) and the second side wall (42) measured in a direction parallel to the first ejection direction (E1) is modulated along a direction being perpendicular to the first ejection direction (E1) and the longitudinal direction (L).

9. The nozzle element (1) according to one of the preceding claims, wherein
- in a cross section perpendicular to the longitudinal direction (L) the basic body (2) has a minimal distance (I) between the first side wall (41) and the second side wall (42), wherein the minimal distance (I) is at least 0.2 mm and/or
- the first recess (S1) has a maximal first recess depth (d1) between the first side wall (41) and the thought first line (51) between the two contact points (C), and the second recess (C2) has a maximal second recess depth (d2) between the second side wall (42) and the thought second line (52) between the contact points (C), wherein a ratio of a sum of the first recess depth (d1) and the second recess depth (d2) to the total distance (DT) between the thought first line (51) and the thought second line (52) has a value between 0.1 and 0.9,.

10. The nozzle element (1) according to one of the preceding claims, wherein the basic body (2) is formed from an elastic material and/or is formed integrally.

11. The nozzle element (1) according to one of the preceding claims, wherein the nozzle element (1) has an attachment section (30) for attaching the nozzle element (1) to a hand piece or an adapter of the hand piece.

12. The nozzle element (1) according to claim 11, wherein the attachment section (30) is configured such that a longitudinal extension of the hand piece is orientated to be tilted relative to the first side wall (41) about an angle less than 45°.

13. The nozzle element (1) according to one of the preceding claims, wherein the first side wall (41) and the second wall (42) mainly extend parallel to each other along the longitudinal direction (L) over a length (LB) of the basic body (2), wherein the pressure relief channel extends at least over the length (LB) of the basic body (2).

14. The nozzle element (1) according to one of the preceding claims, wherein the first recess (S1) and/or the second recess (S2) is arranged between the first channel (10) and the second channel (20).

15. Dental treatment device having a nozzle element (1) according to one of the preceding claims.

## Patentansprüche

1. Düsenelement (1) für eine Zahnbehandlungsvorrichtung, umfassend:
- einen Grundkörper (2), der in einer Längsrichtung (L) langgestreckt und konfiguriert ist, um mindestens teilweise in eine Zahnfleischtasche (7) eingeführt zu werden,
- einen ersten Zuleitungskanal (10) zum Transportieren eines Pulver-Gas-Gemisches (12), wobei der erste Zuleitungskanal (10) im Inneren des Grundkörpers (2) angeordnet ist,
- eine erste Auslassöffnung (11) des ersten Zuleitungskanals (10) in einem Endbereich (E) des langgestreckten Grundkörpers (2) zum Ausstoßen des Pulver-Gas-Gemischs (12),
wobei die erste Auslassöffnung (11) für einen seitlichen Ausstoß des Pulver-Gas-Gemischs (12) in einer ersten Ausstoßrichtung (E1) konfiguriert ist, die relativ zur Längsrichtung (L) schräg ist, wobei sich der Grundkörper (2) entlang der Längsrichtung (L) zu einer vorderen oder distalen Seite (F) des Grundkörpers (2) verjüngt,
**dadurch gekennzeichnet, dass** das Düsenelement ferner mindestens einen Druckentlastungskanal (14) umfasst, der eine Struktur in dem Grundkörper umfasst, die es ermöglicht, dass Luft durch Strömen entlang oder innerhalb des Grundkörpers aus der Zahnfleischtasche fließt oder strömt.

2. Düsenelement (1) nach Anspruch 1, wobei der Teil des mindestens einen Druckentlastungskanals
(i) am Endbereich (E) des Grundkörpers (2) oder
(ii) entlang der Länge des Grundkörpers (2) ausgebildet ist und eine Länge gleich oder größer als die Länge der Zahnfleischtasche (7), in die er eingesetzt ist, aufweist, und/oder
(iii) durch die Form einer Außenfläche (A) des Grundkörpers (2), nämlich durch eine Rille (14), die sich bis zum Endbereich (E) des Grundkörpers (2) erstreckt, ausgebildet ist.

3. Düsenelement (1) nach einem der vorangehenden Ansprüche, wobei im Inneren des Grundkörpers (2) ein zweiter Zuleitungskanal (20) zum Transport eines Fluids (21) eingearbeitet ist, wobei der zweite Zuleitungskanal (20) an einer vorderen (distalen) Seite (F) des Grundkörpers (2) im Endbereich (E) des Grundkörpers (2) eine zweite Auslassöffnung (21) zum Ausstoßen des Fluids (21) in einer zweiten Ausstoßrichtung (E2) aufweist.

4. Düsenelement (1) nach Anspruch 3, wobei der Grundkörper (2) durch ein erstes Rohr (71), das den ersten Kanal (10) bildet, und ein zweites Rohr (72), das den zweiten Kanal (20) bildet, gebildet ist.

5. Düsenelement (1) nach einem der vorangehenden Ansprüche, wobei der Grundkörper (2) mindestens eine erste Seitenwand (41) und eine zweite oder mehr Seitenwände (42) aufweist, die der ersten Seitenwand (41) in einer Richtung senkrecht zur Längsrichtung (L) gegenüberliegend sind, wobei die erste Seitenwand (41) und/oder die zweite Seitenwand (42) mindestens zwei Kontaktpunkte (C) zur Kontaktierung einer Oberfläche des Zahns bei dessen Verwendung aufweist, wobei die erste Seitenwand (41) eine erste Ausnehmung (S1) zwischen zwei Kontaktpunkten (C) aufweist, die durch die erste Seitenwand (41) und eine gedachte erste Linie (51) zwischen den beiden Kontaktpunkten (C) an der ersten Seitenwand (41) begrenzt ist, und/oder die zweite Seitenwand (42) eine zweite Ausnehmung (S2) zwischen zwei Kontaktpunkten (C) aufweist, die durch die zweite Seitenwand (42) und eine gedachte zweite gerade Linie (52) zwischen den beiden Kontaktpunkten (C) an der zweiten Seitenwand (42) begrenzt ist.

6. Düsenelement (1) nach einem der vorangehenden Ansprüche, wobei
- eine erste Fläche (61) der ersten Wand (41) der ersten Ausnehmung (S1) zugeordnet ist und
- eine zweite Fläche (62) der zweiten Wand (42) der zweiten Ausnehmung (S2) zugeordnet ist,
wobei ein Verhältnis einer Summe der ersten Fläche (61) und der zweiten Fläche (62) zu einer Gesamtfläche des Düsenelements (1) einen Wert zwischen 1 und 20 % aufweist.

7. Düsenelement (1) nach einem der vorangehenden Ansprüche, wobei
- eine erste Fläche (61) der ersten Wand (41) der ersten Ausnehmung (S1) zugeordnet ist
und gegebenenfalls
- eine zweite oder mehr Flächen (62) der zweiten oder mehreren Wänden (42) der zweiten oder mehreren Ausnehmungen (S2) zugeordnet sind,
wobei die Summe der Flächen 61 und 62 der Ausnehmungen zwischen 0,01 bis 1 mm² beträgt.

8. Düsenelement (1) nach einem der vorangehenden Ansprüche, wobei ein Abstand zwischen der ersten Seitenwand (41) und der zweiten Seitenwand (42), gemessen in einer Richtung parallel zur ersten Ausstoßrichtung (E1), entlang einer Richtung moduliert ist, die senkrecht zur ersten Ausstoßrichtung (E1) und zur Längsrichtung (L) ist.

9. Düsenelement (1) nach einem der vorangehenden Ansprüche, wobei
- der Grundkörper (2) in einem Querschnitt senkrecht zur Längsrichtung (L) einen minimalen Abstand (I) zwischen der ersten Seitenwand (41) und der zweiten Seitenwand (42) aufweist, wobei der minimale Abstand (I) mindestens 0,2 mm beträgt und/oder
- die erste Ausnehmung (S1) eine maximale erste Ausnehmungstiefe (d1) zwischen der ersten Seitenwand (41) und der gedachten ersten Linie (51) zwischen den beiden Kontaktpunkten (C) aufweist, und die zweite Ausnehmung (C2) eine maximale zweite Ausnehmungstiefe (d2) zwischen der zweiten Seitenwand (42) und der gedachten zweiten Linie (52) zwischen den Kontaktpunkten (C) aufweist, wobei ein Verhältnis einer Summe der ersten Ausnehmungstiefe (d1) und der zweiten Ausnehmungstiefe (d2) zu dem Gesamtabstand (DT) zwischen der gedachten ersten Linie (51) und der gedachten zweiten Linie (52) einen Wert zwischen 0,1 und 0,9 aufweist.

10. Düsenelement (1) nach einem der vorangehenden Ansprüche, **dadurch gekennzeichnet, dass** der Grundkörper (2) aus einem elastischen Material gebildet und/oder einstückig ausgebildet ist.

11. Düsenelement (1) nach einem der vorangehenden Ansprüche, wobei das Düsenelement (1) einen Befestigungsabschnitt (30) zum Befestigen des Düsenelements (1) an einem Handstück oder einem Adapter des Handstücks aufweist.

12. Düsenelement (1) nach Anspruch 11, wobei der Befestigungsabschnitt (30) so konfiguriert ist, dass eine Längserstreckung des Handstücks ausgerichtet ist, um relativ zu der ersten Seitenwand (41) um einen Winkel von weniger als 45° geneigt zu sein.

13. Düsenelement (1) nach einem der vorangehenden Ansprüche, wobei sich die erste Seitenwand (41) und die zweite Wand (42) hauptsächlich parallel zueinander entlang der Längsrichtung (L) über eine Länge (LB) des Grundkörpers (2) erstrecken, wobei sich der Druckentlastungskanal mindestens über die Länge (LB) des Grundkörpers (2) erstreckt.

14. Düsenelement (1) nach einem der vorangehenden Ansprüche, wobei die erste Ausnehmung (S1) und/oder die zweite Ausnehmung (S2) zwischen dem ersten Kanal (10) und dem zweiten Kanal (20) angeordnet ist.

15. Zahnbehandlungsvorrichtung mit einem Düsenelement (1) nach einem der vorangehenden Ansprüche.

## Revendications

1. Elément de buse (1) pour un dispositif de traitement dentaire, comprenant :
- un corps de base (2) allongé dans une direction longitudinale (L) et configuré pour être introduit au moins partiellement dans une poche parodontale (7),
- un premier canal d'alimentation (10) pour transporter un mélange poudre-gaz (12), le premier canal d'alimentation (10) étant incorporé à l'intérieur du corps de base (2),
- une première ouverture de sortie (11) du premier canal d'alimentation (10) dans une zone d'extrémité (E) du corps de base allongé (2) pour éjecter le mélange poudre-gaz (12), la première ouverture de sortie (11) étant configurée pour une éjection latérale du mélange poudre-gaz (12) dans une première direction d'éjection (E1) inclinée par rapport à la direction longitudinale (L), le corps de base (2) se rétrécissant le long de la direction longitudinale (L) vers un côté avant ou distal (F) du corps de base (2),
**caractérisé en ce que** l'élément de buse comprend en outre au moins un canal de décharge de pression (14) comprenant une structure dans le corps de base, qui permet à l'air de circuler ou s'écouler hors de la poche parodontale en s'écoulant le long ou à l'intérieur du corps de base.

2. Elément de buse (1) selon la revendication 1,
dans lequel la partie dudit au moins un canal de décharge de pression est formée
(i) dans la zone d'extrémité (E) du corps de base (2), ou
(ii) le long de la longueur du corps de base (2) et présente une longueur égale ou supérieure à la longueur de la poche parodontale (7) dans laquelle elle est insérée, et/ou
(iii) par la forme d'une surface extérieure (A) du corps de base (2), à savoir par une rainure (14) s'étendant jusqu'à la zone d'extrémité (E) du corps de base (2).

3. Elément de buse (1) selon l'une des revendications précédentes,
dans lequel un deuxième canal d'alimentation (20) pour transporter un fluide (21) est incorporé à l'intérieur du corps de base (2), le deuxième canal d'alimentation (20) présentant une deuxième ouverture de sortie (21) pour éjecter le fluide (21) dans une deuxième direction d'éjection (E2) sur un côté avant (distal) (F) du corps de base (2) dans la zone d'extrémité (E) du corps de base (2).

4. Elément de buse (1) selon la revendication 3,
dans lequel le corps de base (2) est formé par un premier tube (71) formant le premier canal (10) et par un deuxième tube (72) formant le deuxième canal (20).

5. Elément de buse (1) selon l'une des revendications précédentes,
dans lequel le corps de base (2) comprend au moins une première paroi latérale (41) et une deuxième ou plusieurs parois latérales (42) opposée(s) à la première paroi latérale (41) dans une direction perpendiculaire à la direction longitudinale (L),
la première paroi latérale (41) et/ou la deuxième paroi latérale (42) présente(nt) au moins deux points de contact (C) pour contacter une surface de la dent pendant son utilisation,
la première paroi latérale (41) présente un premier évidement (S1) entre deux points de contact (C), délimité par la première paroi latérale (41) et par une première ligne imaginaire (51) entre les deux points de contact (C) au niveau de la première paroi latérale (41), et/ou la deuxième paroi latérale (42) présente un deuxième évidement (S2) entre deux points de contact (C), délimité par la deuxième paroi latérale (42) et par une deuxième ligne droite imaginaire (52) entre les deux points de contact (C) au niveau de la deuxième paroi latérale (42).

6. Elément de buse (1) selon l'une des revendications précédentes,
dans lequel
- une première surface (61) de la première paroi (41) est associée au premier évidement (S1), et
- une deuxième surface (62) de la deuxième paroi (42) est associée au deuxième évidement (S2),
un rapport d'une somme de la première surface (61) et de la deuxième surface (62) sur une surface totale de l'élément de buse (1) ayant une valeur comprise entre 1 et 20 %.

7. Elément de buse (1) selon l'une des revendications précédentes,
dans lequel
- une première surface (61) de la première paroi (41) est associée au premier évidement (S1), et optionnellement
- une deuxième ou plusieurs surfaces (62) de la deuxième ou plusieurs parois (42) sont associées au(x) deuxième ou plusieurs évidements (S2), la somme des surfaces 61 et 62 des évidements étant comprise entre 0,01 et 1 mm².

8. Elément de buse (1) selon l'une des revendications précédentes, dans lequel une distance entre la première paroi latérale (41) et la deuxième paroi latérale (42), mesurée dans une direction parallèle à la première direction d'éjection (E1), est ajustée selon une direction perpendiculaire à la première direction d'éjection (E1) et à la direction longitudinale (L).

9. Elément de buse (1) selon l'une des revendications précédentes,
dans lequel
- dans une section transversale perpendiculaire à la direction longitudinale (L), le corps de base (2) présente une distance minimale (I) entre la première paroi latérale (41) et la deuxième paroi latérale (42), la distance minimale (I) étant d'au moins 0,2 mm, et/ou
- le premier évidement (S1) présente une première profondeur d'évidement maximale (d1) entre la première paroi latérale (41) et la première ligne imaginaire (51) entre les deux points de contact (C), et le deuxième évidement (S2) présente une deuxième profondeur d'évidement maximale (d2) entre la deuxième paroi latérale (42) et la deuxième ligne imaginaire (52) entre les points de contact (C),
un rapport d'une somme de la première profondeur d'évidement (d1) et de la deuxième profondeur d'évidement (d2) sur la distance totale (DT) entre la première ligne imaginaire (51) et la deuxième ligne imaginaire (52) ayant une valeur comprise entre 0,1 et 0,9.

10. Elément de buse (1) selon l'une des revendications précédentes,
dans lequel le corps de base (2) est formé d'un matériau élastique et/ou est formé d'un seul tenant.

11. Elément de buse (1) selon l'une des revendications précédentes,
dans lequel l'élément de buse (1) présente une portion de fixation (30) pour fixer l'élément de buse (1) à une pièce à main ou à un adaptateur de la pièce à main.

12. Elément de buse (1) selon la revendication 11,
dans lequel la portion de fixation (30) est configurée de sorte qu'une extension longitudinale de la pièce à main est orientée en oblique par rapport à la première paroi latérale (41) d'un angle inférieur à 45°.

13. Elément de buse (1) selon l'une des revendications précédentes,
dans lequel la première paroi latérale (41) et la deuxième paroi (42) s'étendent principalement parallèlement l'une à l'autre selon la direction longitudinale (L) sur une longueur (LB) du corps de base (2), le canal de décharge de compression s'étendant au moins sur la longueur (LB) du corps de base (2).

14. Elément de buse (1) selon l'une des revendications précédentes,
dans lequel le premier évidement (S1) et/ou le deuxième évidement (S2) est disposé entre le premier canal (10) et le deuxième canal (20).

15. Dispositif de traitement dentaire comportant un élément de buse (1) selon l'une des revendications précédentes.
